# EUROPEAN PATENT APPLICATION

(11) **EP 0 777 196 A2**
(43) Date of publication of application: **04.06.1997**
(21) Application number: 96308625.1
(22) Date of filing: 28.11.1996
(51) Int. Cl.: G06K 17/00

(54) **Magnetic display erasing apparatus**

(30) Priority: 28.11.1995 JP 309480/95
(71) Applicant: STAR MICRONICS CO., LTD., Shizuoka-shi, Shizuoka-ken 422 (JP)
(72) Inventor: Urushibata, Kiyoshi, Shizuoka-shi, Shizuoka 422 (JP)
(74) Representative: Hale, Peter

(57) **Abstract**

A magnetic display erasing apparatus is provided in which a erasing magnetic field can be realized by using a smaller magnet. A magnet (220) is formed by bending a rectangular plate-like magnet having the N-pole on the surface and the S-pole on the back face, into a U-shape so that the N-pole of one end of the magnet opposes the N-pole of the other end thereof symmetrically with respect to a magnetic display sheet (10). The magnetic display sheet (10) is conveyed by conveying means through the U-shaped space between the poles. Because the magnetic field is symmetrical with respect to the plane of the magnetic display sheet (10), an ideal planar magnetic field is attained on the disposition plane of the magnetic display sheet (10). There is no point where the strength of the magnetic field is null Therefore, the whole region of the empty space can be used for erasure and the space utilization efficiency of the magnet is improved.

## Description

The present invention relates to a magnetic display erasing apparatus for a magnetic display sheet which is sensitive to a magnetic field and displays visible information.

Conventionally, magnetic cards in which a magnetic stripe is formed along the longitudinal direction thereof are widely used in various fields such as bank cards, credit cards and ID cards. In such a magnetic stripe is recorded, for example, an identification code of a user of the card, as patterns of orientations or strengths of magnetization.

However, since data recorded in such a magnetic stripe are invisible information, a special apparatus such as a card reader is necessary when the recorded data are to be directly checked.

A magnetic card of another type is known in which a magnetic display sheet which contains a micro capsule sensitive to a magnetic field is formed at a position other than the position of a magnetic stripe (for example, Japanese Unexamined Patent Publication JP-A 6-168369 (1994)).

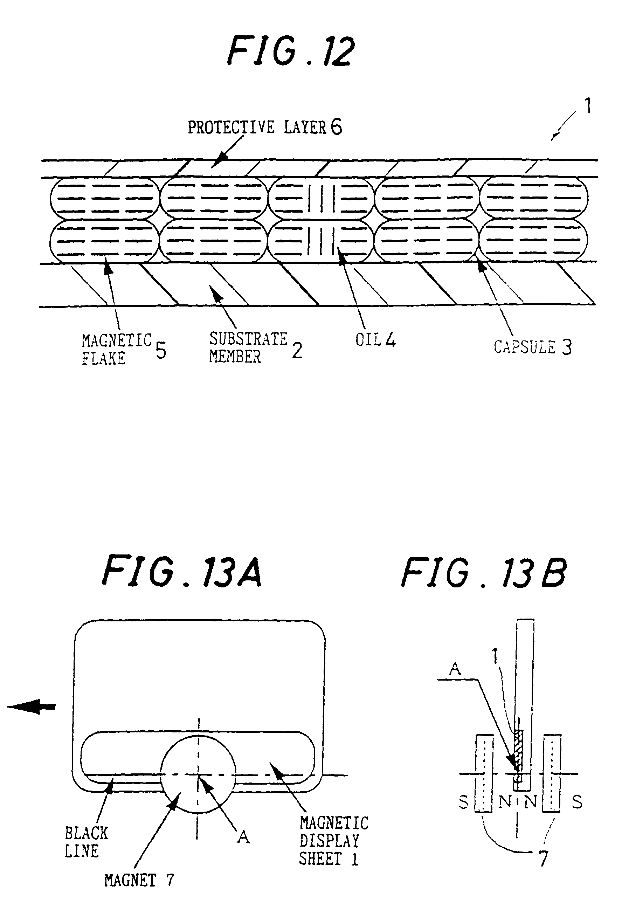

Fig. 12 is a sectional view showing an example of a magnetic display sheet. In a capsule 3, flat magnetic flakes 5 are encapsulated together with an oil 4. A number of capsules 3 are sealed between a substrate member 2 and a protective layer 6. When a magnetic field perpendicular to the magnetic display sheet is applied to the magnetic flakes 5, the magnetic flakes 5 are perpendicularly oriented, so that the optical reflectivity is reduced with the result that the magnetic display sheet becomes dark. On the other hand, when a magnetic field parallel to the card substrate is applied to the magnetic flakes 5, the magnetic flakes 5 are oriented in parallel to each other, so that the optical reflectivity is increased with the result that the magnetic display sheet becomes bright. On this principle, the magnetic display sheet 1 can display visible information such as characters and symbols in accordance with the direction of the applied magnetic field. Consequently, the magnetic card is remarkably improved in ease of use.

Figs. 13A and 13B are a plan view and a side view, respectively, showing an example of a prior art magnetic display erasing apparatus. Such a configuration is disclosed in Japanese Unexamined Utility Model Publication JP-U 7-6901 (1995), and Japanese Examined Patent Publication JP-B2 54-29895 (1979). A pair of permanent magnets 7 are disposed at a predetermined interval so that the magnetic poles thereof which confront each other via the magnetic display sheet 1 provided on a surface of the card have the same polarity, and an erasing operation is realized by moving the magnetic display sheet 1 between the pair of permanent magnets.

In this configuration, a substantially planar magnetic field can be applied to the magnetic display sheet 1, and hence it is expected that the erasing quality is improved.

As shown in Fig. 13, however, the magnets 7 have an identical plate-like shape (herein round shape). The same coercive forces are disposed in parallel to each other. at the center of gravity A of a pattern (the center of a circle) which is obtained by projection of the magnets 7 on the plane of the magnetic display sheet 1 (in the example, the pattern is identical with that obtained by orthogonal projection of the magnets 7). The magnetic fields produced by the magnets 7 perpendicularly act on the magnetic display sheet and cancel each other because the magnetic fields on the center A are equal to each other, with the result that the magnetic field strength on the center A is nulled. Consequently, the region of the magnetic display sheet 1 which passes the center of gravity A is not subjected to the erasing operation, so that the magnetic display in this region is not erased and remains as a black line. This is applicable also to the case where the magnets are of a triangular, square, or semicircular shape. When there are plural pairs of poles confronting each other, a black line remains at the center of gravity of each of the mutual pole region patterns which are obtained by projecting (orthogonally projecting) the regions of the confronting poles on the plane of the magnetic display sheet 1. An ideal planar magnetic field acts on the region other than in the vicinity of the center of gravity A, and hence a perfect erasing operation is executed in that region.

In order to avoid a null region which is beyond the effect of the erasing operation, the magnets 7 should be disposed so that the magnetic display sheet 1 does not pass the vicinity of the center of gravity A. When circular magnets are used as shown in Fig. 13, therefore, only a half or less of the magnetic fields produced by the magnets 7 is used in the erasing operation, thereby lowering the space utilization efficiency of the magnets 7. As a result, this makes the miniaturization of the whole of the apparatus difficult and adds restrictions to the design.

It is an object of the invention to provide a magnetic display erasing apparatus in which an erasing magnetic field can be realized by using a smaller magnet than previously.

The invention is defined in the accompanying independent claims. Preferred features are recited in the dependent claims.

The invention provides a magnetic display erasing apparatus comprising magnetic field producing means having a pair of magnets in which poles of the same polarity oppose each other via a disposition plane where a magnetic display sheet is to be disposed, the magnetic field producing means being arranged to generate a planar magnetic field on the disposition magnetically written into the magnetic display sheet,
wherein the pair of magnets are magnetized or disposed so that a point (a magnetic field null ) where magnetic fields produced by the same polarity of the pair of magnets cancel each other and the strength of a resulting magnetic field is zero, is shifted from a center of gravity of a projection pattern formed on the disposition plane by connecting the pair of magnets.

According to the invention, it is possible to increase the proportion of an area which can be used for erasure in the planar magnetic field produced by the magnets. Since the gap space formed by the magnets can be efficiently used, the magnets and the apparatus can be reduced in size and weight.

The invention provides a magnetic display erasing apparatus comprising magnetic field producing means having a pair of first and second magnets in which poles of the same polarity confront each other via a disposition plane where a magnetic display sheet is to be disposed, the magnetic field producing means for generating a planar magnetic field on the disposition plane, thereby erasing a visible display which is magnetically written into the magnetic display sheet,
wherein a third magnet is disposed so as to have a pole which is directed from a side of the disposition plane to a space formed between the pair of magnets, and thereby a whole region on the disposition plane in a space surrounded by the first, second, and third magnets is covered with the planar magnetic field.

According to the invention, since there is no point where the strength of the magnetic field is zero, on the disposition plane in the gap space surrounded by the magnets, the whole region of the gap space can be used for erasure. Additionally, since the gap space formed by the magnets can be efficiently used, the magnets and the apparatus can be reduced in size and weight.

The invention provides a magnetic display erasing apparatus comprising magnetic field producing means having a pole face in which poles of the same polarity confront each other via a disposition plane where a magnetic display sheet is to be disposed, the magnetic field producing means for generating a planar magnetic field on the disposition plane, thereby erasing a visible display which is magnetically written into the magnetic display sheet,
wherein the pole face of the magnetic field producing means is a part of a magnet body which is continuous, or which is composed of magnet members connected to each other on a side of the disposition plane, and faces of the magnet body which confront the magnetic display sheet are substantially continuous and magnetized to the same polarity.

According to the invention, since there is no point where the strength of the magnetic field is zero, on the disposition plane in the substantially U-shaped gap space formed by the magnet, the whole region of the gap space can be used for erasure. Additionally, since the gap space formed by the magnet can be efficiently used, the magnet and the apparatus can be reduced in size and weight. Since the magnet integrated into one body is used, moreover, the magnet is easy to handle and manufacture, and thereby the magnet can be economically produced. For example, such magnet may be produced only by setting a flexible rubber magnet into a jig and then bending it.

As described above in detail, according to the invention, it is possible to enlarge an area which can be used for erasure in the planar magnetic field produced by the magnet, and the space utilization efficiency of the magnet is increased. Since the magnetic field produced by the magnet can be efficiently used, the magnet and the apparatus can be reduced in size and weight. The planer magnetic field can act on the whole region of the magnetic display sheet, and a convey path can be set on the planer magnetic field, whereby there is no unerased region on the magnetic display sheet.

Other and further objects, features, and advantages of the invention will be more explicit from the following detailed description taken with reference to the drawings wherein:
Figs. 1A through 1C show a first embodiment of the invention, Fig. 1A being a perspective view, Fig. 1B being a sectional view of magnets, etc. which is taken along a plane vertical to a conveying direction of a magnetic display sheet, Fig. 1C being a magnetic flux line chart showing magnetic fields produced by the magnets of Fig. 1B;
Fig. 2 is a sectional view showing another similar embodiment of the invention;
Fig. 3 is a perspective view showing still another embodiment of the invention;
Figs. 4A through 4C show a still further embodiment of the invention, Fig. 4A being a perspective view, Fig. 4B being a sectional view of magnets, etc. which is taken along a plane vertical to a conveying direction of a magnetic display sheet, Fig. 4C being a magnetic flux line chart showing magnetic fields produced by the magnets of Fig. 4b;
Fig. 5 is a perspective view showing another similar embodiment of the invention;
Figs. 6A through 6C show a still further embodiment of the invention, Fig. 6A being a perspective view, Fig. 6B being a sectional view of magnets, etc. which is taken along a plane vertical to a conveying direction of a magnetic display sheet, Fig. 6C being a magnetic flux line chart showing magnetic fields produced by the magnets of Fig. 6B;
Fig. 7 is a perspective view showing another similar embodiment;
Figs. 8A through 8C show a still further embodiment of the invention, Fig. 8A being a perspective view, Fig. 8B being a sectional view of a magnet, etc. which is taken along a plane vertical to a conveying direction of a magnetic display sheet, Fig. 8C being a magnetic flux line chart showing a magnetic field produced by the magnet of Fig. 8B;
Figs. 9A and 9B are perspective views of other similar embodiments;
Figs. 10A and 10B are perspective views of still other embodiments;
Figs. 11A through 11F are perspective views of still further embodiments;
Fig. 12 is a sectional view of an example of a magnetic display sheet; and
Figs 13A and 13B are views of an example of a prior art magnetic display erasing apparatus, Fig. 13A being a plan view, Fig. 13B being a side view.

Now referring to the drawings, preferred embodiments of the invention are described below.

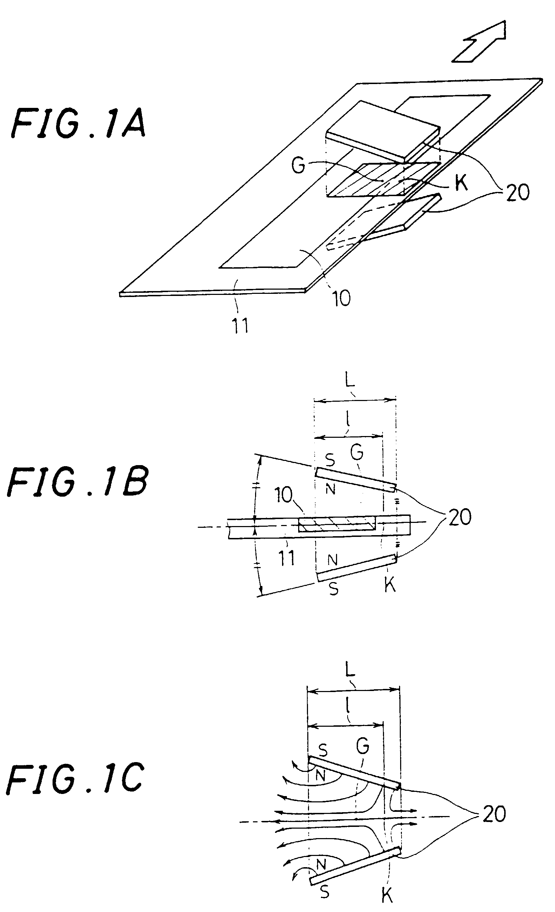

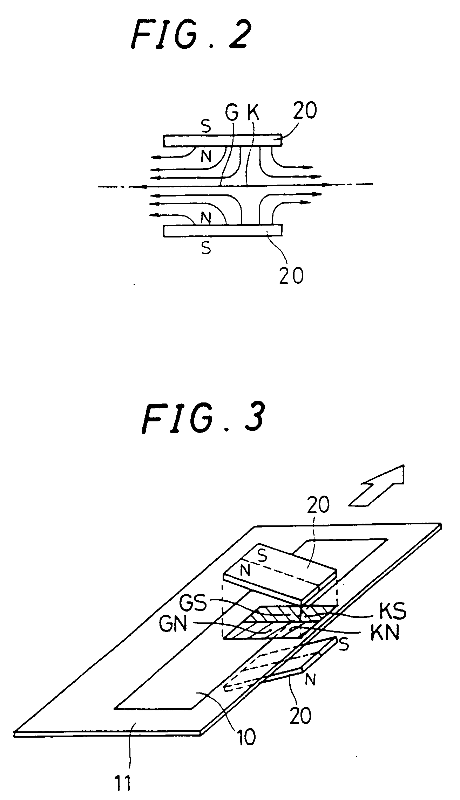

In Figs. 1A and 3, the hatched regions show a projection pattern of magnets 20 which is obtained by orthogonally projecting the magnets onto the plane between,and equidistant from,the magnets 20. The plane is called a disposition plane where the magnetic display sheet 10 is to be disposed.

The magnetic display sheet 10 is formed in a rectangular substrate 11 made of a plastic or the like and conveyed by a conveying apparatus which is not shown (e.g., a belt conveyor) in the longitudinal direction.

The plate-like magnets 20 having an identical rectangular shape and the same coercive force are arranged parallel with the conveying direction of the magnetic display sheet 10, and are inclined by the same angle so that their N-poles oppose each other across the disposition plane of the magnetic display sheet 10. The magnets diverge similarly from the disposition plane to form the two oblique sides of a trapezoid. The magnets 20 are disposed in alignment with the disposition plane of the magnetic display sheet 10. The magnetic display sheet 10 is conveyed by conveying means which is not shown in the gap between the magnets 20.

A static magnetic field due to a current can be determined from Biot-Savart's law. A magnetic field due to a ferromagnetic substance or a permanent magnet can be determined from Coulomb's law using a magnetic moment. The total magnetic field can be determined by adding the magnetic fields together. A magnetic flux line chart of the magnetic fields which are produced by the magnets 20 and obtained in this way is shown in Fig 1C.

As described above, since the magnets 20 are disposed so as to be in alignment with the disposition plane of the magnetic display sheet 10, the magnetic fields of the magnets 20 are also symmetrical with respect to the disposition plane of the magnetic display sheet 10. Thus, a planar magnetic field is formed at the disposition plane of the magnetic display sheet 10. In the present embodiment of the invention, the ideal planar magnetic field produced by the magnets coincides with the disposition plane of the magnetic display sheet.

As shown in Fig. 1A, a projection pattern of the magnets 20 which is formed by connecting the corresponding corners of the rectangular magnets 20 confronting each other by straight lines,and then connecting intersection points where the lines intersect the disposition plane of the magnetic display sheet 10,is rect angular (the hatched region). In this embodiment of the invention, since the magnets 20 are disposed in alignment with the disposition plane of the magnetic display sheet 10, the projection pattern of the magnets 20 coincides with that which is obtained by orthogonally projecting the magnets onto the disposition plane of the magnetic display sheet 10. The center of gravity of the rectangular projection pattern is positioned at a position indicated by G.

At a point K, the magnetic fields produced by the magnets 20 cross each other and cancel each other, so that the strength of the synthesized magnetic field is at a null Consequently, the erasing operation is not performed in the vicinity of the point K. As a result, the region other thanin the vicinity of the point K constitutes an erasable region. Such a point where magnetic fields of the same polarity cancel each other and the strength of a resulting magnetic field is zero is called a magnetic field null. In the prior art as shown in Fig. 13 where the magnets are disposed in parallel, the null K coincides with the center of gravity G and hence only a half or less of the projection pattern is used in the erasing operation. By contrast, in the embodiment of the invention, the magnets are inclined and the poles of the same polarity oppose each other across the magnetic display sheet 10 interposed between them. Hence, the magnetic field null point K does not coincide with the center of gravity G. The magnetic field null point K is shifted laterally across the plane from the middle of the projected distance L which is obtained by orthogonally projecting the magnets 20 onto the disposition plane of the magnetic display sheet 10, and the magnetic field at the center of gravity G is not zero. The lateral extent of the magnetic field to the left of the null point K (the length 1) is longer than a half of the length L, so that the space utilization efficiency of the magnets 20 is considered to be enhanced. As described above, in the region other than the magnetic field dead point K, an ideal planar magnetic field is attained. Therefore, when the magnetic display sheet 10 is passed through the region embraced by the length 1 as shown in Fig. 1B, the whole area of the magnetic display sheet 10 can be erased.

Fig. 2 is a sectional view showing another similar embodiment in which magnets 20 having the same shape and the same distribution pattern of magnetic moment are disposed in parallel. In the magnets 20, the coercive force of the right hand portion is greater than that of the left hand portion. Also in this embodiment, the null point K of the synthesized magnetic field produced by the magnets 20 does not coincide with the center of gravity G of the projected pattern of the magnets. The magnetic field null point K is shifted to the right from the middle of the length L of the projected pattern (again obtained by orthogonally projecting the magnets 20 onto the plane of the magnetic display sheet. Therefore, the space utilization efficiency of the magnets 20 is considered to be enhanced. As apparent also from the above-described embodiment, the shapes of the magnets 20, the distribution of the magnetic moment, and the positions of the magnets 20 can be arbitrarily determined as long as a planar magnetic field is produced by the magnets 20.

Fig. 3 shows a further embodiment. In this embodiment, diverging magnets 20 having two poles each are arranged about the conveying direction of the magnetic display sheet 10 so that the poles of the same polarity oppose each other. In this configuration, magnetic field null points KN and KS of the synthesized magnetic fields produced by the opposing poles do not coincide with the respective centers of gravity GN and GS of the projected patterns of the pole regions. The magnetic field null points are deviated to the right from the middle of the distance L of the pattern.

Therefore, the space utilization efficiency of the magnets 20 is enhanced.

In the embodiments described above, the magnetic display sheet 10 is conveyed- However, in the alternative the magnets 20 may be moved, or the magnetic display sheet and the magnets may both be moved. Additionally, it is possible for the sections of the magnets shown in Fig. 1B to form a predetermined angle with respect to the conveying direction instead of being aligned in the conveying direction of the magnetic display sheet 10. In the embodiments, the magnetic display sheet 10 is disposed so as to overlap the projection pattern of the magnets 20.

Alternatively, the magnetic display sheet may be disposed outside the projection pattern. Although in the magnets 20 of Figs. 1A and 2, the N-poles of the magnets confront each other, the S-poles thereof may confront each other, and in this alternative configuration the directions of the magnetic fields are inverted, but the same effects as described above can be attained.

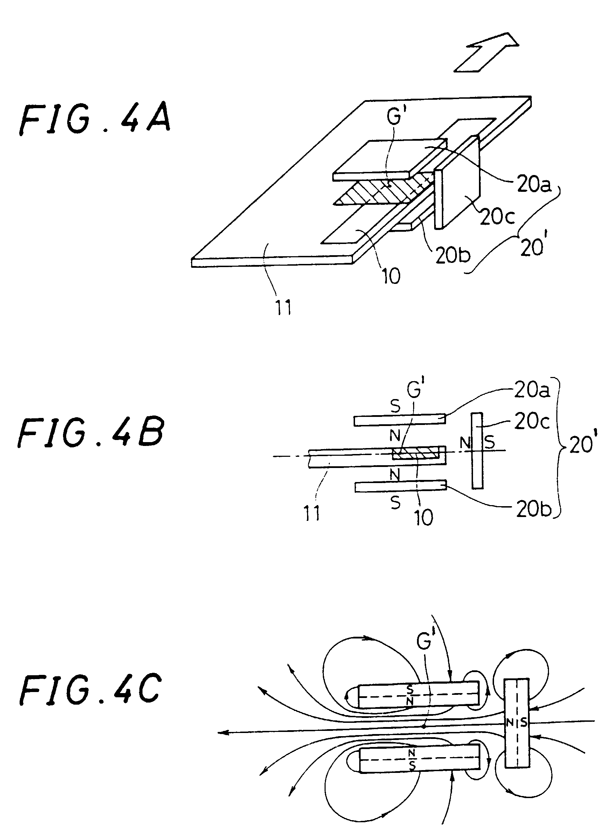

Fig. 4 shows another embodiment of the invention.

The magnetic display sheet 10 is formed in a rectangular substrate 11 made of a plastic or the like and conveyed by a conveying apparatus which is not shown (e.g., a belt conveyor) in the longitudinal direction.

As shown in Fig. 4A, the magnet 20'is composed of three plate-like magnets 20a, 20b and 20c. The magnets 20a and 20b have the same rectangular shape and the same coercive force. They extend in parallel along the conveying direction of the magnetic display sheet 10, so that their N-poles oppose each other across a predetermined distance parallel to the disposition plane of the magnetic display sheet 10. The plate-like magnet 20c is arranged to the side of the magnets 20a and 20b extending perpendicularly across the disposition plane of the magnetic display sheet 10 and parallel to the adjacent edges of the magnets 20a and 20b. The N-pole of the magnet 20c is adjacent the magnets 20a and 20b.

The pattern which is obtained by performing projection (orthogonal projection) of the magnets 20a and 20b onto the disposition plane of the magnetic display sheet 10 is rectangular (the hatched region). The center of gravity of the projected pattern is indicated by G'. The magnetic display sheet 10 is conveyed by conveying means which is not shown, in the space which is defined between the magnets 20'.

In the space through which the magnetic display sheet 10 is conveyed, as shown in Fig. 4B, the magnetic display sheet 10 is surrounded on three sides, above, below and to the right hand side, by the N-poles. As seen from Fig. 4C,showing magnetic flux lines of the magnetic fields produced by the magnets 20a to 20c, magnetic flux from the N-poles mainly exits from the space by the open end on the left not having the magnet 20c.

Because the magnetic fields produced by the magnets are symmetrical with respect to a plane, an ideal planar magnetic field is attained on the disposition plane of the magnetic display sheet 10. When only the synthesized magnetic field of the magnets 20a and 20b is to be considered, the magnetic field null point K is formed at the center of gravity G in the same manner as the prior art example of Fig. 13. Since the magnet 20c is added, no magnetic field null point in the synthesized magnetic field of the magnets 20a to 20c is formed in the disposition plane of the magnetic display sheet 10. Since the magnets 20a and 20b are arranged at a distance from the magnet 20c,and there are gaps between the magnets 20a and 20b and the magnet 20c, the magnetic fields from the N-poles of the magnets 20a and 20b can leak through the gaps. However, the amount of the leakage can be reduced by reducing the space and enhancing the coercive force of the magnet 20c, thereby enabling the erasing operation to be performed in the whole of the space. As long as the erasing operation is performed in a planar magnetic field, therefore, erasure is enabled in both the gap space defined by the magnets 20 and the external space, thereby increasing the space utilization efficiency of the magnets 20. When the magnetic display sheet 10 is conveyed, the whole of the magnetic display sheet can be erased.

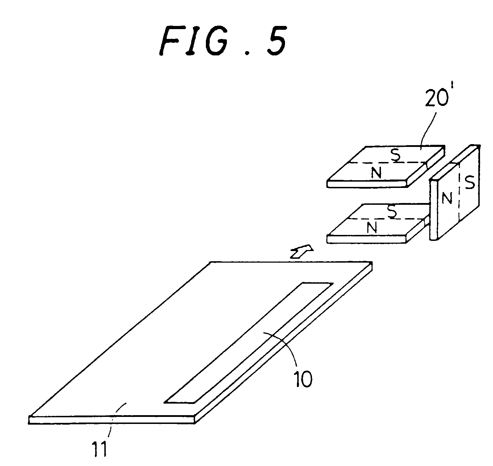

As with the previous embodiments the magnets 20' may be moved or the magnetic display sheet and the magnets may both be moved. The magnets 20' may be disposed so as to be inclined with respect to the conveying direction of the magnetic display sheet 10 instead of being parallel thereto. The magnetic display sheet 10 is disposed so as to overlap the projected pattern of the magnets 20a and 20b. Alternatively, the magnetic display sheet may be disposed outside the projected pattern. The magnets 20a and 20b are arranged in parallel to each other. Alternatively, the magnets 20a and 20b may be inclined as are those of the first embodiment in Fig. 1. As long as a planar magnetic field is produced by the magnets 20', the shapes of the magnets 20, the distribution of the magnetic moment. and the positions of the magnets can be other than those shown as will be apparent to the skilled person. As shown in Fig.5, each of the magnets 20' may be a magnet in which two or more poles are arranged along the conveying direction of the magnetic display sheet 10 and poles of the same polarity oppose each other. In Fig. 4A, the magnetic display sheet 10 is surrounded by the N-poles of the magnets 20. Alternatively, the magnetic display sheet 10 may be surrounded by the S-poles. In the alternative, the directions of the magentic fields can be inverted, but the same effects as described above are attained.

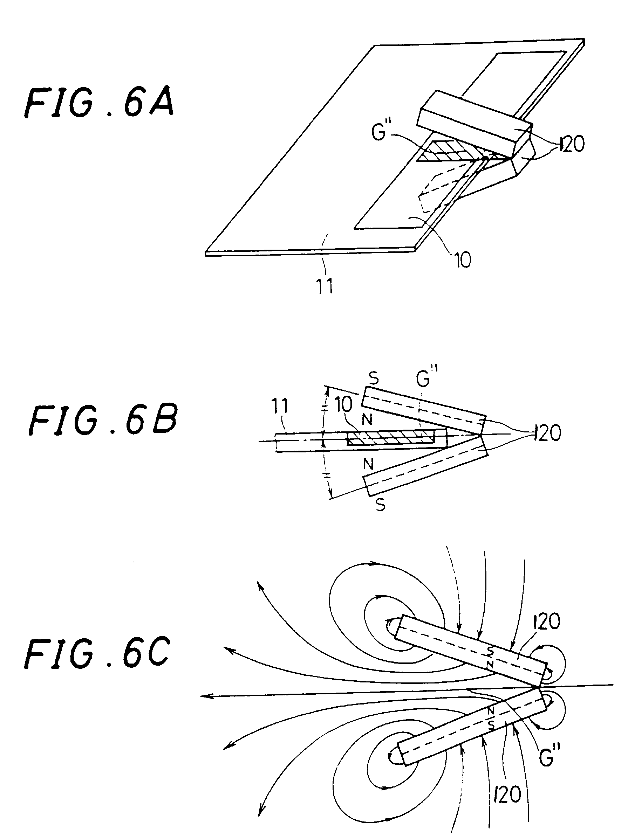

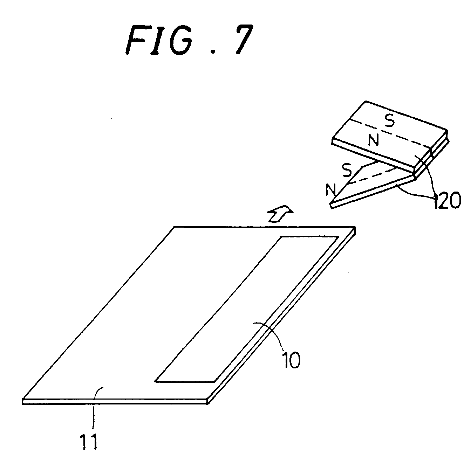

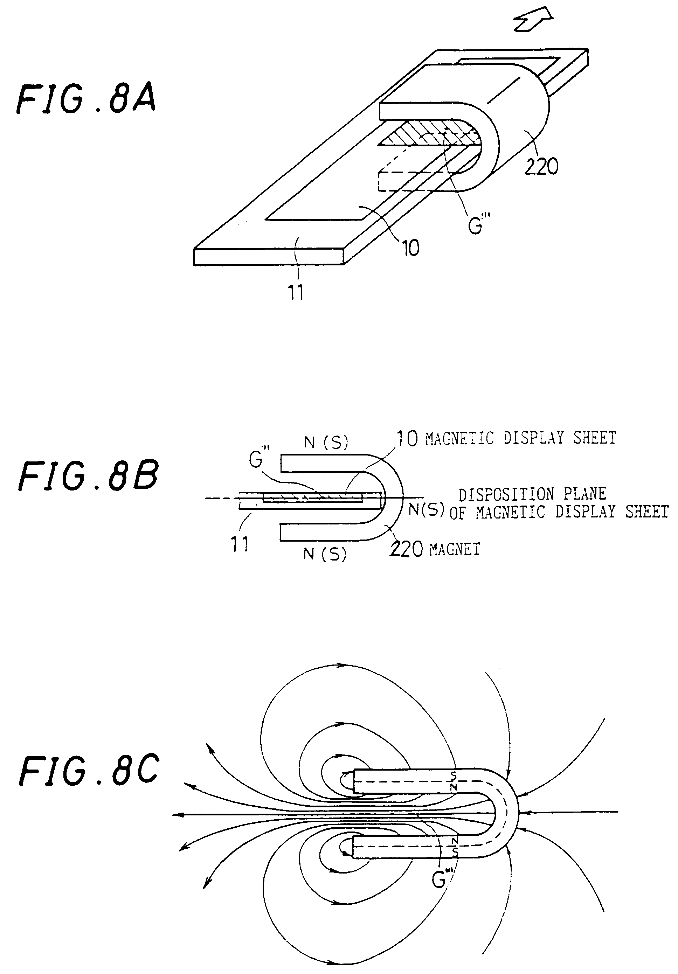

Figs. 6A through 6C show a further embodiment of the invention.

The magnetic display sheet 10 is formed in a rectangular substrate 11 made of a plastic or the like and conveyed by a conveying apparatus which is not shown (e. g., a belt conveyor) in the longitudinal direction.

As shown in Fig. 6A, plate-like magnets 120 having the same rectangular shape and the same coercive force are arranged in alignment with the conveying direction of the magnetic display sheet 10. The N-poles oppose each other across the disposition plane of the magnetic display sheet 10 by inclining the magnets away from the plane by the same angle. The magnets are in contact at one end to form a V shape between them. In other words, the magnets 120 are coupled. The pattern which is obtained by performing projection (orthogonal projection) of the magnets 120 onto the disposition plane of the magnetic display sheet 10 is rectangular (the hatched region). The center of gravity of the projection pattern is indicated by G". The magnetic display sheet 10 is conveyed by conveying means,which is not shown, in the V-shaped space which is defined by the magnets 120.

In the space where the magnetic display sheet 10 is conveyed, the magnetic display sheet 10 is surrounded by the N-poles forming the V shape in section perpendicular to the conveying direction of the magnetic display sheet 10. As seen from Fig. 6C showing magnetic flux lines of the magnetic fields produced by the magnets 120, magnetic flux emitted from the N-poles exit the space from the open end of the V shape. Because the magnetic fields of the magnets are symmetrical with respect to the plane. A planar magnetic field is attained on the disposition plane of the magnetic display sheet 10. In the case of Fig. 1 the magnets 20 are parallel to the plane. The synthesized magnetic field of the magnets 20 forms a magnetic field null point on the disposition plane of the magnetic display sheet 10. By contrast, in this embodiment, magnetic flux emitted from the N-poles of the magnets 120 is blocked at the closed end of the V shape by the ends of the magnets 120 which are in contact. Consequently, all the magnetic flux emitted from the N-poles of the magnets 20 is directed leftward, with the result that no magnetic field null point is formed on the disposition plane of the magnetic display sheet 10. Therefore, the erasure is enabled in both the space defined by the magnets 120 and the external space, thereby increasing the space utilization efficiency of the magnets 120. When the magnetic display sheet 10 is conveyed, the whole of the magnetic display sheet can be erased.

As before, the magnets 120 may be moved, or the magnetic display sheet and the magnets may both be moved. The magnetic display sheet 10 is disposed so as to overlap the projected pattern of the magnets 120. Alternatively, the magnetic display sheet may be disposed at a position where the sheet does not overlap the projected pattern. As long as a planar magnetic field is produced by the magnets 120, the shapes of the magnets 120, the distribution of the magnetic moment, and the positions of the magnets can be other than those shown, as will be apparent to the skilled person. As shown in Fig.7, each of the magnets 120 may be magnets in which two or more poles are arranged along the conveying direction of the magnetic display sheet 10 so that the poles of the same polarity oppose each other.

Fig. 8 shows a still further embodiment of the invention.

The magnetic display sheet 10 is formed in a rectangular substrate 11 which is made of a plastic or the like and conveyed by a conveying apparatus which is not shown (e. g., a belt conveyor) in the longitudinal direction.

As shown in Fig. 8, a magnet 220 is formed by bending a rectangular plate-like magnet having the N-pole on one major surface and the S-pole on the other major surface, into a U shape so that the N-pole of one end opposes the N-pole of the other end across the plane and parallel with the magnetic display sheet 10. The projected pattern which is obtained by performing projection (orthogonal projection) of the magnet plane of the magnetic display sheet 10 is rectangular (the hatched region). The center of gravity of the projection pattern is indicated by G'''.The magnetic display sheet 10 is conveyed by conveying means which is not shown, in the U-shaped space defined by the magnet 220.

In the space where the magnetic display sheet 10 is conveyed, the magnetic display sheet 10 is surrounded by the N-poles on three sides, namely in the upper and lower sides and the right hand side when viewed according to the section of Fig.8B. As seen from Fig. 8C showing magnetic flux lines of the magnetic field produced by the magnet 220,magnetic fluxes emitted from the N-pole exit from the space to the left. Because the synthesized magnetic field of the magnet 220 symmetrical with respect to a plane, an ideal planar magnetic field is attained on the disposition plane of the magnetic display sheet 10. In the same manner as the embodiment of Fig. 6, no magnetic field null point in the synthesized magnetic field of the magnet 220 is formed on the disposition plane of the magnetic display sheet 10. As far as the erasing operation is performed in a planar magnetic field, therefore, the magnetic display sheet 10 can be erased in both the space defined by the magnet 220 and the external space, and thereby the space utilization efficiency of the magnet 220 is enhanced. Since the magnet has an integrated body, the magnet is also advantageously easier to manufacture and handle.

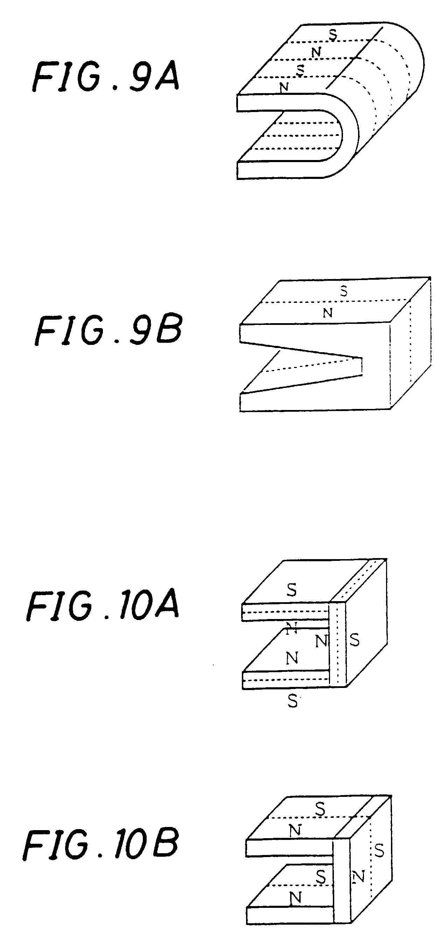

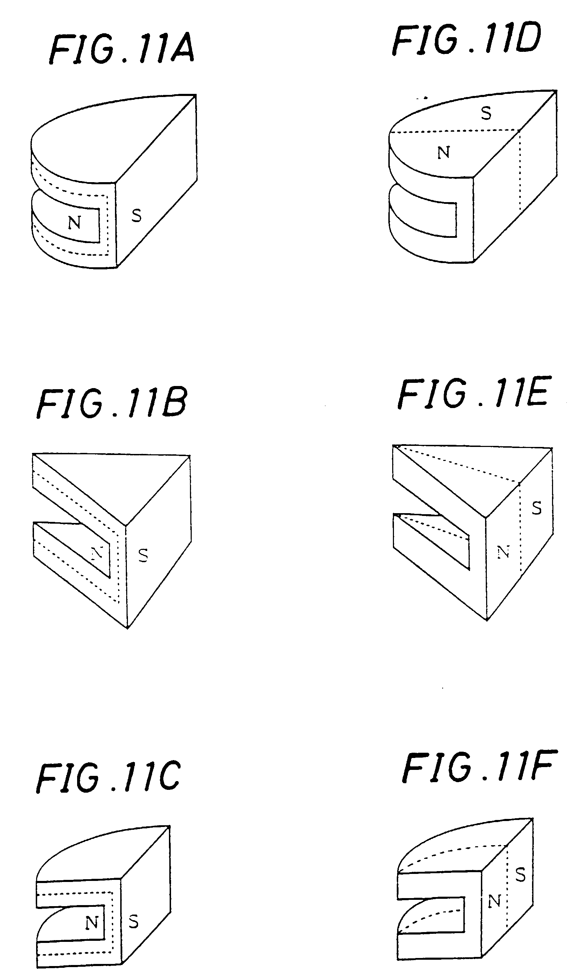

As before, the magnet 220 may be moved, or the magnetic display sheet and the magnet may both be moved. The magnet 220 may be disposed so as to be angled with respect to the conveying direction of the magnetic display sheet 10 instead of being parallel thereto. The magnetic display sheet 10 is disposed so as to overlap the projection pattern of the magnet 220. Alternatively, the magnetic display sheet may be disposed at a position where the sheet does not overlap the projection pattern. The magnet 220 may have another shape, for example, a flared U-like shape, an integrated V-like shape, or a horseshoe shape. The magnet 220 may be a magnet in which two or more poles are arranged side by side, as shown in Fig.9A, or the thickness can be varied as shown in Fig. 9B. The magnet 220 may be formed into a U-like shape by combining a plurality of magnets into one body as shown in Fig.10. As shown in Fig. 11, the portions of the magnet which have the same polarity and oppose each other may have a shape other than a rectangle, such as a triangle, a semicircle, or a quadrant.

In the embodiments described above, permanent magnets are used. Alternatively, electromagnets may be used. In the case where electromagnets are used, the erasing and non-erasing operations are easily selected depending on energization or deenergization of the coils. When the magnetic display sheet 10 is suitably positioned at rest, therefore, visible information may be erased by energizing the electromagnets.

The term 'center of gravity' is used herein in relation to the projected image of the magnet onto the disposition plane. The projected image itself does not, of course, have a center of gravity. The term center of gravity is used notionally in relation to a theoretical body, having the shape of the projected image and even thickness in the direction of the projection, to define a point on the projected image.

The invention may be embodied in other specific forms without departing from the essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A magnetic display erasing apparatus comprising: magnetic field producing means (20;20';120;220) having a pair of poles of the same polarity opposing each other across a disposition plane to define a space for a magnetic display sheet (10), the magnetic field producing means being arranged to produce a substantially planar magnetic field at the disposition plane, wherein the magnet is arranged and/or adapted such that a null in the magnetic field produced by the pair of poles is not coincident with a notional center of gravity of a projected pattern of the poles at the disposition plane.

2. A magnetic display erasing apparatus as claimed in claim 1:
including a third pole arranged to one side of the said space between the pair of poles, the third pole being operable to distort the magnetic field of the pair of poles to shift the null.

3. A magnetic display erasing apparatus as claimed in claim 1 or 2, wherein the magnetic field producing means comprises a continuous magnet body.

4. A magnetic display erasing apparatus as claimed in claim 3 when dependent on claim 2, wherein the continuous magnet body is of a unitary construction.

5. A magnetic display erasing apparatus as claimed in claim 3 when dependent on claim 2, wherein the magnet body comprises a plurality of connected magnet members.

6. A magnetic display erasing apparatus as claimed in any of claims 1 to 5 in which the pair of poles are mutually divergent from the disposition plane.
